# EUROPEAN PATENT APPLICATION

(11) **EP 4 636 385 A1**
(43) Date of publication of application: **22.10.2025**
(21) Application number: 24744941.6
(22) Date of filing: 19.01.2024
(51) Int. Cl.: G01N 15/04, G01N 1/38, G01N 1/40, G01N 21/73

(54) **METHOD FOR DETECTING METAL IMPURITIES IN ELECTRODE ACTIVE MATERIAL**

(30) Priority: 20.01.2023 KR 20230009013
(71) Applicant: LG Energy Solution, Ltd., Seoul 07335 (KR)
(72) Inventor: CHO, A Ra, Daejeon 34122 (KR); KIM, Sang Woo, Daejeon 34122 (KR)
(74) Representative: Goddar, Heinz J.
(86) International application number: PCT/KR2024/001002
(87) International publication number: WO 2024/155162

(57) **Abstract**

The present invention relates to a method, for detecting metal foreign matters in an electrode active material, including a first step of forming a metal foreign matter extraction solution by mixing an electrode active material and a nitric acid aqueous solution, a second step of obtaining a precipitate by selectively precipitating a metal foreign matter in the metal foreign matter extraction solution, and a third step of measuring a content of the metal foreign matters in the precipitate.

## Description

### TECHNICAL FIELD

The present invention relates to a method for detecting a metal foreign matter in an electrode active material, and more particularly, to a method for detecting a fine metal foreign matter having a size of 40 µm or less, difficult to remove in advance, and quantitatively analyzing a content thereof.

### BACKGROUND ART

Metal foreign matters included in an electrode active material among secondary battery materials may be precipitated on a negative electrode surface via charging and discharging, to form an internal short circuit, and thus be a cause of capacity decrease, low-voltage failure, and/or fire, and the like. Accordingly, it is necessary to measure, evaluate, and manage a content of the metal foreign matters in the electrode active material so as to manage quality of a secondary battery.

Accordingly, methods of removing the metal foreign matters in the electrode active material using a magnetic separator, or measuring the content of the metal foreign matters in the electrode active material through ICP analysis and managing such that the content thereof is within a certain range have been typically used. However, such typical methods have a problem that it is difficult to detect the metal foreign matters having a small particle size or a low content. Specifically, the metal foreign matters having a particle size of 40 µm or less are difficult to remove in advance using the magnetic separator, and the metal foreign matters having a content less than 1 ppm are difficult to measure the content by the ICP analysis due to a matrix effect caused by an electrode active material component.

Therefore, development of a method for detecting the fine metal foreign matters and quantitatively analyzing the content thereof so as to manage the content of the metal foreign matters in the electrode active material is being demanded.

### DISCLOSURE OF THE INVENTION

### TECHNICAL PROBLEM

In order to solve the above problem, an aspect of the present invention provides a method for quantitatively detecting a fine metal foreign matter, having an extremely small content, included in an electrode active material.

### TECHNICAL SOLUTION

According to an aspect of the present invention, there is provided a method for detecting a metal foreign matter in an electrode active material, the method including a first step of forming a metal foreign matter extraction solution by mixing an electrode active material and a nitric acid aqueous solution, a second step of obtaining a precipitate by selectively precipitating a metal foreign matter in the metal foreign matter extraction solution, and a third step of measuring a content of the metal foreign matter in the precipitate.

In this case, the electrode active material may include the metal foreign matter having a particle size of 40 µm or less, and the metal foreign matter may be at least one selected from the group consisting of Cu, Zn, Al, Ti, Sn, Pb, and an alloy thereof.

In addition, the electrode active material may be a positive electrode active material, and then the positive electrode active material may have a D₅₀ of 1 µm to 40 µm.

Meanwhile, it is preferable that the first step is performed under a condition in which a solubility of the metal foreign matter is equal to or more than 80%, and a solubility of the electrode active material metal component is equal to or less than 50%. Specifically, the first step may be performed by a method in which an electrode active material is dissolved in a nitric acid aqueous solution having a nitric acid concentration of 20% to 40% by weight, and is agitated at a room temperature for 1 hour to 30 hours.

Meanwhile, the second step may be performed by controlling a pH of the metal foreign matter extraction solution. For example, the second step may be performed by a method in which an ammonia solution is added to the metal foreign matter extraction solution to control a pH of the metal foreign matter extraction solution to 4.8 to 6.5.

Next, the third step may be performed by a method in which the precipitate is dissolved in acid, and a content of the dissolved metal foreign matter is measured by an inductively coupled plasma (ICP) method.

In this case, the acid may include hydrochloric acid, nitric acid, hydrogen peroxide, and a mixture thereof, and preferably may include at least one of hydrochloric acid and nitric acid, and hydrogen peroxide.

### ADVANTAGEOUS EFFECTS

Since a detection method according to the present invention includes forming a metal foreign matter extraction solution by selectively dissolving a metal foreign matter from an electrode active material using a nitric acid aqueous solution, obtaining a precipitate by selectively precipitating the metal foreign matter from the metal foreign matter extraction solution, and measuring a content of the metal foreign matter included in the precipitate, a matrix effect of an electrode active material metal component may be minimized, thereby quantitatively analyzing the content of the metal foreign matter having a particle size of 40 µm or less, and included in a content less than 1 ppm. Specifically, the detection method according to the present invention removes the electrode active material metal component through two steps, and involves a process in which the metal foreign matter is concentrated, and thus the matrix effect caused by the electrode active material metal component may decrease and a detection limit of the metal foreign matter may be lowered, thereby making it possible to perform a detection at a ppb level.

In addition, since the detection method according to the present invention involves a process of removing the electrode active material metal component, a greater amount of the electrode active material may be added to the nitric acid aqueous solution having the same volume, compared to when a typical solution for ICP analysis is manufactured. Since a solution for ICP analysis is manufactured by concentrating the metal foreign matter through precipitation, and re-dissolving the metal foreign matter in acid, an amount of an electrode active material sample, analyzable for a unit volume in the solution for the ICP analysis, finally formed becomes greater than a typical case. Accordingly, the metal foreign matter non-uniformly distributed in the electrode active material may be easily detected by using the method according the present invention.

### BRIEF DESCRIPTION OF THE DRAWINGS

FIG. 1 is a view for describing a detection method according to the present invention.
FIG. 2 is a photograph showing a metal foreign matter extraction solution (a) of Example 1, and a sample solution (b) in which a precipitate is dissolved in acid.

### BEST MODE FOR CARRYING OUT THE INVENTION

Hereinafter, the present invention will be specifically described.

As a result of repeated research on managing a metal foreign matter in an electrode active material, which influence battery performance and safety, the inventors have found out that the metal foreign matter, having a very small amount, included in the electrode active material may be quantitatively detected through a method in which a metal foreign matter extraction solution is formed by mixing the electrode active material and a nitric acid aqueous solution, a precipitate is obtained by selectively precipitating the metal foreign matter from the extraction solution, and a content of the metal foreign matter included in the precipitate is measured, and thus have completed the invention.

Specifically, the method for detecting a metal foreign matter in an electrode active material according to the present invention includes a first step of forming the metal foreign matter extraction solution by mixing the electrode active material and the nitric acid aqueous solution, a second step of obtaining the precipitate by selectively precipitating the metal foreign matter in the metal foreign matter extraction solution, and a third step of measuring the content of the metal foreign matter in the precipitate.

Hereinafter, the method for detecting a metal foreign matter in an electrode active material according to the present invention will be specifically described.

### (1) First step: Forming metal foreign matter extraction solution

First, a metal foreign matter extraction solution is formed by mixing an electrode active material and a nitric acid aqueous solution and selectively dissolving a metal foreign matter (a first step).

In this case, the electrode active material may include the metal foreign matter having a particle size of 40 µm or less, and the metal foreign matter may be at least one selected from the group consisting of Cu, Zn, Al, Ti, Sn, Pb, and an alloy thereof, preferably Cu, Zn, or a combination thereof, and more preferably Cu.

The electrode active material may be a positive electrode active material, or a negative electrode active material, and preferably the positive electrode active material. Meanwhile, the positive electrode active material may have a D₅₀ of 1 µm to 40 µm, and preferably 1 µm to 25 µm.

In the first step, the nitric acid aqueous solution is used as a extraction solution so as to precipitate the metal foreign matter included in the positive electrode active material. Specifically, the first step may be performed by a method in which the foreign matter in the electrode active material is eluted by mixing the nitric acid aqueous solution and the electrode active material and agitating during a certain time.

In order to increase an extraction rate of the metal foreign matter, it is preferable to perform the first step under a condition in which a solubility of the metal foreign matter is equal to or more than 80%, and a solubility of a metal component (for convenience, called as 'an electrode active material metal component'), that constitutes the electrode active material, such as Ni, Co, Mn, and Al is equal to or less than 50%. The solubility of the metal foreign matter and the solubility of the electrode active material metal component change according to a concentration of the nitric acid aqueous solution, an elution time, and an elution temperature. Accordingly, the solubility of the metal foreign matter and the solubility of the electrode active material metal component may be controlled by appropriately controlling a nitric acid aqueous solution concentration and a metal ion elution condition used according to a type of the metal foreign matter to be detected.

For example, it is preferable that when the metal foreign matter to be detected is copper (Cu), a nitric acid aqueous solution having a nitric acid concentration of 20% to 40% by weight. When a concentration of the nitric acid aqueous solution satisfies the above range, an extraction rate of copper increases by increasing a solubility copper and relatively reducing solubilities of transition metals.

In addition, it is preferable that when the metal foreign matter to be detected is copper (Cu), the metal foreign matter is eluted by dissolving the electrode active material in the nitric acid aqueous solution, and performing agitation under a room temperature condition, for example, a temperature condition of 10°C to 30°C, for 1 hour to 30 hours, preferably 5 hours to 30 hours, and more preferably 5 hours to 25 hours. When the elution temperature and time satisfy the above range, a copper ratio in the extraction solution may increase by increasing a solubility of copper in the nitric acid aqueous solution compared to the electrode active material metal component.

However, when a type of the metal foreign matter to be detected is changed, the concentration of the nitric acid aqueous solution and the elution condition may be accordingly changed.

After extracting the metal foreign matter in the electrode active material in the above method, the solution including the metal foreign matter is separated through a method such as centrifugation to obtain the metal foreign matter extraction solution.

As in the present invention, when metal is eluted by using a difference between the solubility of the electrode active material metal component and the solubility of the metal foreign matter, a content of the eluted electrode active material metal component may be minimized. Specifically, when the above method is used, the content of the electrode active material metal component included in the extraction solution may be reduced to a level of 1/2 to 1/3 or less with respect to a content included in the electrode active material.

### (2) Second step: Selectively precipitating

Next, a precipitate is obtained by selectively precipitating the metal foreign matter included in the metal foreign matter extraction solution obtained through the first step (a second step).

The second step may be performed, for example, by a method of controlling a pH of the metal foreign matter extraction solution, so as to separate the metal foreign matter from the metal foreign matter extraction solution through precipitation.

Not only the metal foreign matter but also the electrode active material metal component such as Ni, Co, and Mn are included in the metal foreign matter extraction solution obtained through the first step. Therefore, the metal foreign matter to be detected and the electrode active material metal component need to be separated so as to accurately measure the content of the metal foreign matter. For this, in the present invention, the metal foreign matter to be detected is selectively precipitated by controlling the pH of the metal foreign matter extraction solution. In this case, controlling the pH of the metal foreign matter extraction solution may be performed, for example, by a method of adding a basic solution such as an ammonia solution to the metal foreign matter extraction solution. Meanwhile, the ammonia solution having an ammonia concentration of 1% to 20% by weight, preferably 1% to 15% by weight, and more preferably 5% to 15% by weight may be used as the above ammonia solution.

Meanwhile, the pH of the metal foreign matter extraction solution may be controlled such that a selective precipitation rate of the metal foreign matter increases. For example, it is preferable to control the pH such that when the metal foreign matter to be precipitated is copper, the pH of the metal foreign matter extraction solution is 4.8 to 6.5. When the pH of the metal foreign matter extraction solution satisfies the above range, the selective precipitation rate of copper may increase to effectively separate the electrode active material metal component and copper, and the electrode active material metal component in the precipitate may be minimized, thus mitigating the matrix effect of the electrode active material metal component while measuring the content of the metal foreign matters. When the pH of the metal foreign matter extraction solution exceeds 6.5, the electrode active material metal component precipitates with copper, and when the pH is less than 4.8, the precipitation rate of copper decreases, which makes it difficult to mitigate the matrix effect of the electrode active material metal component while measuring the content of the metal foreign matter.

Meanwhile, the pH range of the metal foreign matter extraction solution in the present step is not limited to the above range, and when a type of the metal foreign matter to be detected is changed, the pH range of the metal foreign matter extraction solution may be controlled to a pH range in which the metal foreign matter may be selectively precipitated.

When the metal foreign matter is selectively precipitated by controlling the pH of the metal foreign matter extraction solution as in the above, the content of the electrode active material metal component included in the precipitate may be reduced to a level of 1/20 or less of the content included in the electrode active material, and thus the matrix effect of the electrode active material metal component may be mitigated while measuring the content of the metal foreign matter, and the content of the metal foreign matter, having an extremely small amount, included at a ppb level may be quantitatively measured.

The precipitate is obtained by performing a step of selectively precipitating the metal foreign matter through the above method, separating the precipitate from the metal foreign matter extraction solution through a method such as centrifugation, and drying the precipitate.

### (3) Third step: Measuring content of metal foreign matters

Next, the content of the metal foreign matter in the precipitate is measured (a third step). In this case, measuring the content of the metal foreign matter may be performed, for example, through an inductively coupled plasma (ICP) method.

In this case, measuring the content of the metal foreign matter using the inductively coupled plasma (ICP) method may be performed by a method in which a sample solution is prepared by dissolving the precipitate in acid, and the content of the metal foreign matter in the sample solution is measured using an inductively coupled plasma light-emission analyzer (ICP-OES), an inductively coupled plasma atomic emission spectroscopy (ICP-AES), or an inductively coupled plasma mass spectrometer (ICP-MS).

In this case, the acid may include hydrochloric acid, nitric acid, hydrogen peroxide, and a mixture thereof, and preferably may include at least one of hydrochloric acid, and nitric acid, and hydrogen peroxide.

As described above, since the content of the electrode active material metal component included in the precipitate through the second step is very small at a level of 1/20 or less of the content included in the electrode active material, an environment in which the matrix effect caused by the electrode active material metal component is small is made. Accordingly, the content of the metal foreign matter included in an extremely small amount at a ppb level may be analyzed through the ICP method.

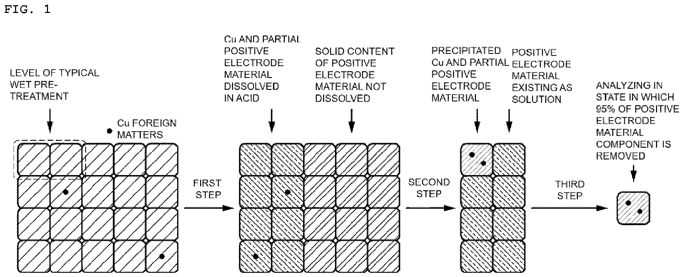

FIG. 1 illustrates views for describing a method for detecting a metal foreign matter in an electrode active material according to the present invention. As illustrated in FIG. 1, according to a method according to the present invention, since while going through each operation, a ratio of the electrode active material metal component decreases in a sample for measuring, and a ratio of the metal foreign matter such as Cu increases in the sample for measuring, the matrix effect of the electrode active material metal component may be mitigated, thereby quantitatively detecting the metal foreign matter having a very small amount.

### MODE FOR CARRYING OUT THE INVENTION

Hereinafter, the present invention will be described in more detail through a specific example.

### Example 1

A metal foreign matter extraction solution was prepared by adding copper particles of 0.23 mg to a positive electrode active material (NCM811) of 10.8 g, adding a nitric acid aqueous solution of 50 ml having a concentration of 20% by weight, agitating at a room temperature at 300 rpm for 24 hours, and centrifuging at 8000 rpm for 10 minutes.

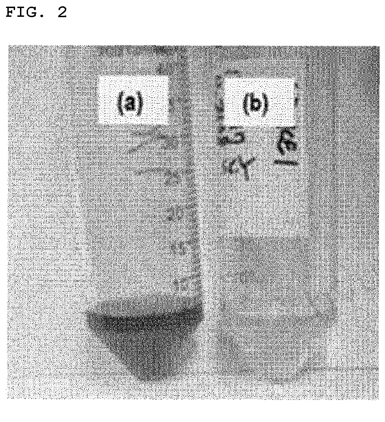

After collecting the metal foreign matter extraction solution of 10 g, a Cu content in the metal foreign matter extraction solution was measured using an ICP-OES apparatus. FIG. 2(a) is a photograph of the collected metal foreign matter extraction solution.

Thereafter, an ammonia solution having a concentration of 13% by weight was added to the metal foreign matter extraction solution of 10 g until a pH was 6.5, was agitated for 20 minutes to precipitate copper, and was centrifuged to separate the precipitate and the solution. After the obtained precipitate was dried, the dried precipitate was dissolved in a mixture solvent of hydrochloric acid of 2 ml and hydrogen peroxide of 0.5 ml to prepare a sample solution, and the Cu content in the sample solution was measured with the ICP-OES apparatus. FIG. 2(b) is a photograph of the sample solution having been prepared by dissolving the precipitate in the acid.

A Cu recovery ratio was measured by calculating a percentage of the content of Cu in the precipitate with respect to the content of Cu in the metal foreign matter extraction solution measured above. The measurement result is shown in Table 1 below.

### Example 2

A Cu recovery ratio was measured in the same method as Example 1 except that when copper was precipitated, an ammonia solution having a concentration of 13% by weight was added to a metal foreign matter extraction solution until the pH was 5.6.

### Example 3

A Cu recovery ratio was measured in the same method as Example 1 except that when copper was precipitated, an ammonia solution having a concentration of 13% by weight was added to a metal foreign matter extraction solution until the pH was 4.8.

**[Table 1]**

| | Cu recovery ratio (%) |
|---|---|
| Example 1 | 98 |
| Example 2 | 99 |
| Example 3 | 93 |

It may be confirmed through the Table 1 that when the pH is controlled to 4.8 to 6.5 by adding the ammonia solution to a non-magnetic extraction solution, at least 90% of copper in the non-magnetic extraction solution is precipitated.

### Example 4

A metal foreign matter extraction solution was prepared by adding copper particles of 0.23 mg to a positive electrode active material (NCM811) of 10.8 g, adding a nitric acid aqueous solution of 50 ml having a concentration of 20% by weight, agitating at a room temperature at 300 rpm for 24 hours, and centrifuging at 8000 rpm for 10 minutes.

Thereafter, an ammonia solution having a concentration of 13% by weight was added to the metal foreign matter extraction solution of 10 g until a pH of the ammonia solution is 5.6, was agitated for 1 hour, was maintained for 23 hours to precipitate copper, and was centrifuged to separate the precipitate and the solution. After the obtained precipitate was dried, the dried precipitate was dissolved in a mixture solvent of hydrochloric acid of 2 ml and hydrogen peroxide of 0.5 ml to prepare a sample solution, and the Cu content in the sample solution was measured with the ICP-OES apparatus, and the content of Cu (unit: mg/kg) per the positive electrode active material of 1 kg was calculated using the measured Cu content. The measurement result is shown in Table 2 below.

### Example 5

A metal foreign matter extraction solution was prepared by adding a nitric acid aqueous solution of 100 ml having a concentration of 20% by weight to a positive electrode active material (NCM811) of 20 g, agitating at a room temperature at 300 rpm for 24 hours, and centrifuging at 8000 rpm for 10 minutes.

Thereafter, an ammonia solution having a concentration of 13% by weight was added to the metal foreign matter extraction solution of 43 g until a pH is 5, was agitated for 1 hour and was maintained for 23 hours to precipitate copper, and was centrifuged to separate the precipitate and the solution. After the obtained precipitate was dried, the dried precipitate was dissolved in a mixture solvent of hydrochloric acid of 2 ml and hydrogen peroxide of 0.5 ml to prepare a sample solution, and the Cu content in the sample solution was measured with the ICP-OES apparatus, and the content of Cu (unit: mg/kg) per the positive electrode active material of 1 kg was calculated using the measured Cu content. The measurement result is shown in Table 2 below.

### Example 6

A metal foreign matter extraction solution was prepared by adding a nitric acid aqueous solution of 100 ml having a concentration of 20% by weight to a positive electrode active material (NCM811) of 20 g, agitating at a room temperature at 300 rpm for 24 hours, and centrifuging at 8000 rpm for 10 minutes.

Thereafter, Cu of 0.5 µg (0.06 mg when converted with respect to the positive electrode active material of 1 kg) was added to the metal foreign matter extraction solution of 43 g, an ammonia solution having a concentration of 13% by weight was added to the metal foreign matter extraction solution of 43 g until a pH is 5, was agitated for 1 hour and was maintained for 23 hours to precipitate copper, and was centrifuged to separate the precipitate and the solution. After the obtained precipitate was dried, the dried precipitate was dissolved in a mixture solvent of hydrochloric acid of 2 ml and hydrogen peroxide of 0.5 ml to prepare a sample solution, and the Cu content in the sample solution was measured with the ICP-OES apparatus, and the content of Cu (unit: mg/kg) per the positive electrode active material of 1 kg was calculated using the measured Cu content. The measurement result is shown in Table 2 below.

**[Table 2]**

| | Cu content (mg/kg) |
|---|---|
| Example 4 | 20.1 |
| Example 5 | 0.35 |
| Example 6 | 0.41 |

It may be confirmed that in a case of Example 4, since a measurement sample was prepared by mixing Cu of 0.23 mg to the positive electrode active material of 10.8 g, the concentration of Cu per the positive electrode active material of 1 kg is a level of about 21 mg/kg, and a value measured by the method according to the present invention is 20.1 mg/kg, and the value is very similar to a content of Cu really mixed. In addition, it may be confirmed that when Example 5 and Example 6 are compared, a difference between Example 5 and Example 6 is identical to the Cu content additionally added in Example 6. This shows that the content of the metal foreign matters may be comparatively accurately measured using the method according to the present invention.

In addition, it may be confirmed through the measurement values shown in Table 2 that the metal foreign matters included in an extremely small amount at a ppb level may be quantitatively detected using the method according to the present invention.

## Claims

1. A method for detecting a metal foreign matter in an electrode active material, the method comprising:
a first step of forming a metal foreign matter extraction solution by mixing an electrode active material and a nitric acid aqueous solution;
a second step of obtaining a precipitate by selectively precipitating a metal foreign matter in the metal foreign matter extraction solution; and
a third step of measuring a content of the metal foreign matter in the precipitate.

2. The method of claim 1, wherein the electrode active material comprises the metal foreign matters having a particle size of 40 µm or less.

3. The method of claim 2, wherein the metal foreign matter is at least one selected from the group consisting of Cu, Zn, Al, Ti, Sn, Pb, and an alloy thereof.

4. The method of claim 1, wherein the first step is performed under a condition in which a solubility of the metal foreign matter is equal to or more than 80%, and a solubility of an electrode active material metal component is equal to or less than 50%.

5. The method of claim 1, wherein the nitric acid aqueous solution has a nitric acid concentration of 20% to 40% by weight.

6. The method of claim 1, wherein the first step is performed by a method in which the electrode active material is dissolved in the nitric acid aqueous solution having a nitric acid concentration of 20% to 40% by weight, and is agitated at a room temperature for 1 hour to 30 hours.

7. The method of claim 1, wherein the second step is performed by controlling a pH of the metal foreign matter extraction solution.

8. The method of claim 7, wherein an ammonia solution is added to the metal foreign matter extraction solution to control the pH of the metal foreign matter extraction solution to 4.8 to 6.5.

9. The method of claim 1, wherein the second step further comprises separating the precipitate from the metal foreign matter extraction solution through centrifugation and drying the precipitate.

10. The method of claim 1, wherein the third step is performed by a method in which the precipitate is dissolved in acid, and a content of a dissolved metal foreign matter is measured in an inductively coupled plasma (ICP) method.

11. The method of claim 10, wherein the acid comprises hydrochloric acid, nitric acid, hydrogen peroxide, and a mixture thereof.

12. The method of claim 10, wherein the acid comprises at least one of hydrochloric acid and nitric acid, and hydrogen peroxide.
